# EUROPEAN PATENT APPLICATION

(11) **EP 2 447 063 A1**
(43) Date of publication of application: **02.05.2012**
(21) Application number: 10188888.1
(22) Date of filing: 26.10.2010
(51) Int. Cl.: B32B 38/06, B32B 38/18

(54) **Method and apparatus for registered embossing of a laminate**

(71) Applicant: Rodolfo Comerio S.r.l., 21058 Solbiate Olona (VA) (IT)
(72) Inventor: Comerio, Carlo, 21058, Solbiate Olona (VA) (IT)
(74) Representative: Zardi, Marco

(57) **Abstract**

Method for providing a laminate product comprising the steps of: continuous coupling between a support substrate and a printed film with a predefined decoration, and by obtaining a laminate sheet (L); synchronised embossing of said laminate sheet, wherein: said embossing is also carried out continuously, through the passage of said laminate product between at least one engraved embossing cylinder (1), and a pressure counter-cylinder (2); the process comprises operations for registering the engraved cylinder (1), to keep the embossing synchronised, with suitable registration displacements (ω_{R}, S_{R}) of said engraved cylinder, said displacements being operated: simultaneously with a reduction of the thrust pressure present between said engraved cylinder and said counter-cylinder, from a nominal thrust pressure (P) to a lower thrust registration pressure (P_{R}), or due to a sliding between the surface (3) of said engraved cylinder (1) and the surface (4) of the laminate sheet, the latter being in substantially plastic state due to the temperature.

## Description

### Field of application

The invention relates to the field of production of laminated products, in particular laminated products reproducing a natural material, such as for example wood. The invention in particular relates to an embossing technique of the aforesaid laminated products which is registered (synchronised) with a pre-printed drawing.

### Prior art

Laminated materials and coatings are known from the prior art, comprising a substrate serving as a support coated by a film printed with any decoration, typically reproducing a noble and/or natural material. For example, a known laminate is formed by a substrate comprising a given number of superimposed glass fibre reinforced PVC films, and a printed film reproducing the appearance of a noble material, such as wood.

This technique is commonly used for producing imitation wood floorings which are named "wood effect" or "parquet effect" or simply "laminated parquet".

The development of the printing techniques, including digital printing, allows a very high quality printing capable of a good imitation of any natural material. For example, it is possible to achieve accurate reproduction of the colours, the tones and the grains of any type of wood. However, the above is not enough to confer to the product an acceptable aspect, given that the surface of the coating film is glossy and smooth to touch, thus being absolutely unnatural and quite far from the appearance of a natural material such as wood.

In order to overcome this drawback, it is known to subject the laminate to an embossing process, after the coupling between the substrate and the printed film. The embossing process imparts a series of reliefs on the surface of the laminate, creating a roughness that is perceptible to touch, bringing the product closer to the desired natural aspect.

A first technique provides for imparting a continuous embossing, substantially by passing the laminate continuously between an engraved cylinder and an opposite pressure cylinder also referred to as "counter cylinder". This technique is quick and can substantially be implemented directly "in line" with the printing and coupling between the substrate and printed film, operating at the same speed. However, this solution is not satisfactory because the embossing pattern generated by the engraved cylinder is repeated periodically at each complete rotation of the cylinder, thus being not coordinated with the printing. For example, the pattern of the roughness is not consistent with the grains, nodes, or other distinctive features of the wood reproduced by the printing. Substantially, the aspect of the finished product, although slightly improved to touch with a surface that seems rough instead of smooth, is clearly perceived as artificial.

In order to overcome also this drawback, processes of registered or synchronised embossing are also known, wherein the roughness produced by the embossing on the surface of the laminate are specifically coordinated with the printed decoration. It can be understood that the embossing member is specific for a given decoration in this case.

The process of registered embossing produces a realistic imitation of a natural material (wood, stone, etc...), but reveals some technical problems. Actually, it is necessary to ensure that the embossing is strictly carried out in a registered manner, so that the three-dimensional profile engraved onto the surface of the laminate accurately matches with the printing on the film. Actually, a possible misalignment or delay/advance of the engraved cylinder would jeopardize the process creating a product with unnatural and unsatisfactory appearance. In the prior art, in order to attain this object, the registered embossing is carried out in a discontinuous manner, i.e. substantially through the following steps:
a) a laminated sheet, produced continuously, is cut into panels having a predetermined dimension, for example 2x4 metres;
b) each panel is conveyed singularly to an embossing machine which substantially operates as a press; the panel is aligned on the two axes, with respect to the embossing member, with the help of suitable references;
c) finally, the embossing press engraves the desired relief (embossing) on the surface of the panel.

An accurate aligning, as indicated in step b), allows obtaining an accurate registered embossing. The references can be generated during the printing, for example in portions of the panel intended to be discarded during a subsequent step of cutting into strips.

A drawback of this technique lies however in the discontinuous operation, which is slow and expensive. Furthermore, the off-line embossing press is expensive and bulky. Since the referred laminate is typically a low cost product, there is a need of simplifying and making the process as inexpensive as possible. For such purpose, a felt need is to operate the embossing continuously, i.e. directly on the sheet (or strip) of laminate instead of on previously cut panels, but in the prior art, up to now, this has not been deemed viable.

One of the reasons is the high pressure that is required for the embossing, and which does not allow to use the registering techniques which are known from the field of printing.

More in detail, and with the aim of disclosing the technical problem, it is considered that the thrust between printing cylinders is generally less than 10 kg for each centimetre of length of the generatrix of the cylinder (kg/cm). Typically, the thrust is 5 - 10 kg/cm. This value makes possible a forward or rearward sliding of the cylinders, allowing to keep registered the various colours which are applied one after the other in the polychrome printing. However, in the case of the embossing, the thrust is considerably higher, typically greater than 20 kg/cm and preferably between 50 and 75 kg/cm. So far, a sliding of the engraved cylinder with the aim of maintaining the registered condition has been deemed incompatible with such thrust.

### Summary of the invention

The object of the invention is to overcome the above mentioned drawbacks. More precisely, the object of the invention is that to provide an efficient, quick and cost-effective technique for registered (or synchronised) embossing of a laminate product of the referred type.

According to a first aspect of the invention, a process for providing a laminate product comprises the steps of:
- continuous coupling between a support substrate and a printed film with a predetermined decoration, obtaining a laminate sheet;
- synchronised embossing of said laminate sheet, the embossing being synchronised with the decoration of said printed film;
and it is characterised in that:
- said embossing is carried out continuously, by means of passage of said laminate product between at least one engraved embossing cylinder, and a pressure counter-cylinder;
- the embossing is synchronised by suitable registration displacements of said engraved cylinder, said displacements being operated:
   a) in conjunction with a reduction of the thrust pressure present between said engraved cylinder and said counter-cylinder, or
   b) due to a sliding between said engraved cylinder and the surface of the laminate, the latter being in substantially plastic state due to the temperature.

The term "registration displacements" is used to indicate the displacements of the engraved cylinder required so that the embossing is correctly synchronised with the decoration printed on the film. The decoration repeats with a given frequency, which usually corresponds to the diameter of the cylinder itself, so that the registration is preferably carried out at least for each revolution of the cylinder. More preferably, the described registration is carried out at least while a joining zone, which is located between adjacent portions of laminate and is intended to be discarded, passes between the cylinders.

More precisely, said joining zone is represented by a narrow strip of the laminate, between two portions whose length is equivalent to the diameter of the cylinder, which are also referred to as "pitch" in the technical language. The cutting zone allows cutting the laminate into panels and, consequently, it represents waste material.

The registration is guided by suitable references or "notches" made on the laminate, which are detected by suitable readers, such as for example optical readers, according to a technique which is per se known, being used for printing. The registration may comprise a rapid forward or rearward rotation of the cylinder, to correct a delay or advance error with respect to the longitudinal direction of advancement of the laminate, and/or an axial displacement of the cylinder, to correct a positioning error in the transverse direction, i.e. perpendicular to the abovementioned direction of advancement.

The option a) is based on the finding of a temporarily reduction of the thrust pressure between the cylinders, so as to allow the engraved cylinder to perform the required registration displacements, forward/rearwards or laterally. The thrust pressure can be reduced up to causing a detachment, if suitable, but generally the actual detachment is not necessary. It has been found that by reducing the thrust pressure to a value lower than the nominal embossing pressure, and for example comparable with that of printing, it is possible to perform the registration of the engraved cylinder without the risk of damaging the laminate.

The following is a preferred implementation, which will be illustrated more in detail hereinafter. An embossing machine essentially comprises an engraved cylinder and a counter-cylinder associated to a hydraulic system which imparts the required thrust pressure. Said hydraulic system comprises a hydraulic cylinder, preferably of the double action type, having a piston which operates on the counter-cylinder indirectly by means of an interface member, such as for example an eccentric controlled by an electric motor.

During the normal operation, the hydraulic cylinder is controlled so as to keep a constant thrust pressure of the counter-cylinder, through per se known means, typically comprising a circuit with a pump, a suitable valve and suitable transducers, all being controlled by a PLC.

In order to operate the registration, the method provides steps of: i) temporarily modifying the control of the hydraulic cylinder, changing to constant set-up position, instead of constant pressure; ii) reducing the thrust pressure of the counter-cylinder on the engraved cylinder, by operating on said eccentric, or other interface element. The latter operation can be called "opening of the counter-cylinder", even though, as previously mentioned, it is not essential for the invention that the counter-cylinder is physically moved away from the engraved cylinder so leaving an air gap, given that the objects of the invention are also attained by reducing the thrust pressure without detachment.

In said condition, the engraved cylinder may perform the required registration movements, i.e. the rapid forward or rearward and/or axial displacement registration movements.

The above option b) is based on the fact that the applicant has surprisingly found that a registration can be provided by exploiting the plasticity of the plastic material of the laminate. In suitable conditions of temperature and thrust pressure, the registration is made possible by the state of plasticity of the laminate. Preferably the temperature of the laminate is equal to or greater than 150 °C and more preferably between 150 and 200 °C. In a preferred application, the substrate of the laminate is made of PVC reinforced with glass fibre, or a material having equivalent features, coated with a printed plastic film, and the temperature is preferably ≥ 150 °C and more preferably between 150 and 200 °C.

A further aspect of the invention is the correction of a synchronisation error between the embossing and the printing, by modifying the temperature of the engraved cylinder. The diameter of the engraved cylinder, in fact, must usually be the same as the pitch of the printing on the laminate, otherwise a systematic error would occur, i.e. at each rotation the engraved cylinder would accumulate advance or delay with respect to the laminate.

A machine for the production of a laminate, adapted to operate with the previously described method is also an object of the present invention.

The invention makes efficient and economically feasible the continuous registered (synchronised) embossing of a laminate, for example of a floor wood-effect laminate, this application being mentioned solely by way of a non-limiting example. Thus, the invention allows obtain laminates of high aesthetic quality, for example laminates reproducing a parquet floor, improving the productivity and at a lower cost compared to the prior art.

The advantages of the invention shall be more evident with the help of the description that follows, referring to a preferred embodiment.

### Brief description of the figures

Fig. 1 is a scheme of a process of continuous registered embossing according to the invention, illustrating a laminate sheet, the engraved cylinder and the counter-cylinder.
Fig. 2 is a top view of the laminate sheet of Fig. 1.
Fig. 3 is a scheme of the process, with the components in axonometric view.
Fig. 4 is analogous to Fig. 3, and it refers to the registration operation.
Fig. 5 is a detail of the contact zone between the embossing cylinder and the laminate.
Fig. 6 is a diagram of the hydraulic control of the counter-cylinder of Fig. 1, according to a particularly preferred embodiment.

### Detailed description

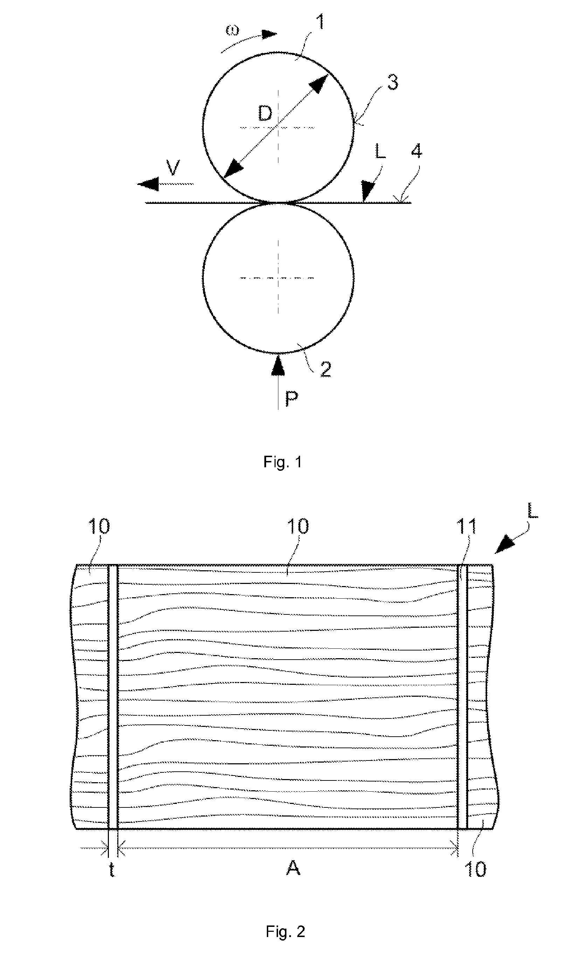

An embossing process according to one of the embodiments of the invention is schematized in Fig. 1. A laminate sheet, globally denoted with L, is driven with a transport velocity V between an engraved embossing cylinder 1 with diameter D, and a counter-cylinder 2. The counter-cylinder 2 imparts a thrust pressure P on the engraved cylinder 1, to guarantee the efficiency of the embossing. The surface 3 of the engraved cylinder 1 comprises suitable reliefs which, by contact, generate a pattern in relief on the face 4 of the laminate L. The engraved cylinder 1 rotates at a velocity ω (omega). The counter-cylinder 2 is usually coated with rubber.

The structure of the laminate sheet L is per se known and it comprises a substrate, for example obtained by superimposition of glass fibre reinforced films, adapted to confer the required rigidity and consistency to the product, on which a printed film forming the face 4 is fixed, for example glued.

Hereinafter, reference is made to a laminate for parquet effect floors, wherein the face 4 of the laminate L has a printed decoration reproducing the appearance of wood.

With reference to Fig. 2, portions 10 with length A preferably equivalent to the base circumference of the engraved cylinder 1, i.e. equivalent to π · D are identified in the direction of the length of the laminate L. The portions 10 identify the pitch of the sheet L. The printed decoration on the face 4 is repeated for each portion 10, as exemplified in Fig. 2.

The portions 10 are separated by brief joint sections 11, with length "t", to allow the cutting of the laminate into panels corresponding to the portions 10. The panels are then intended to be cut into floor strips of commercial dimensions.

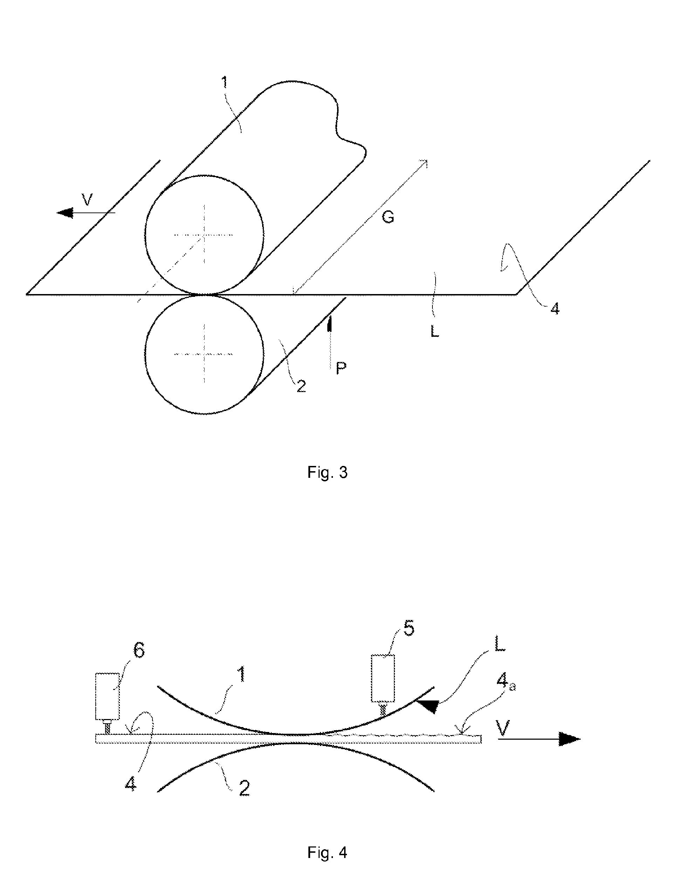

The thrust pressure P exerted by the counter-cylinder 2 is usually expressed according to the length of the ideal contact line G (Fig. 3) between the cylinders and the sheet L. It is commonly measured, in the field, in kg/cm. The embossing of a laminate of the type herein considered requires for example a thrust pressure normally between 50 and 75 kg/cm, such range however not being restrictive for the application of the invention.

The embossing is performed in a registered manner, directly on the laminate sheet L and keeping the engraved cylinder 1 synchronised with the advancement of the laminate sheet L, thus ensuring that the embossing precisely coincides with the decoration, obtaining a particularly natural aspect of the product.

According to one of the aspects of the invention, the registration of the engraved cylinder 1 is performed in conjunction with a reduction of the thrust pressure between the engraved cylinder 1 and the counter-cylinder 2. As exemplified in Fig. 4, the counter-cylinder 2 is controlled in such a manner to deliver a thrust pressure P_{R} lower than the nominal operating pressure P. Such reduced pressure P_{R} is suitable to allow a sliding between the engraved cylinder 1 and the surface 4 of the laminate L, which is in contact with the said engraved cylinder 1. The reduced pressure P_{R} may be determined according to contingent needs, among which the characteristic of the laminate, velocity, etc. While the thrust pressure is reduced to said value P_{R}, the engraved cylinder 1 is controlled to perform the required registration through rapid rotary movements ω_{R} and/or axial movements S_{R} as indicated in Fig. 4. A rotary movement can correct an advance or delay error of the engraved cylinder 1 with respect to the laminate, while an axial movement can correct a misalignment error perpendicular to the direction of advancement of the sheet L.

For example the value of the reduced pressure is preferably equivalent to 50% of the nominal one, or lower than 50%. In absolute terms, it is preferably lower than 20 kg/cm and more preferably in the range 5-10 kg/cm.

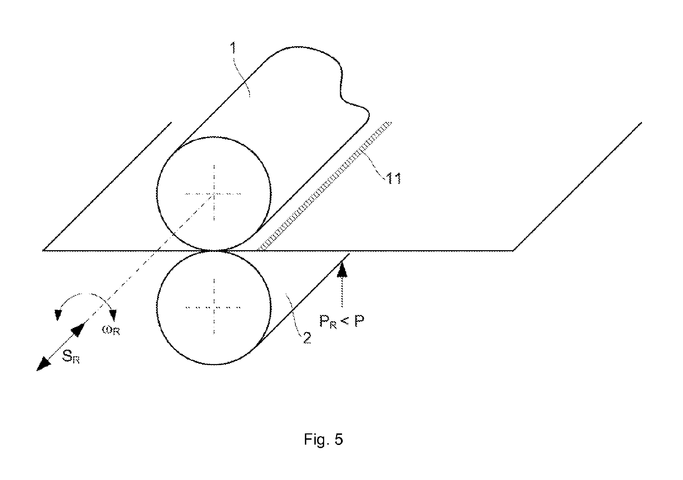

The amount of said registration movements is calculated in accordance with a signal provided by suitable notch readers, for example at least one notch reader arranged for detecting the position of the engraved cylinder 1, and a notch reader arranged to detect the position of the sheet L of the laminate. The process is further schematised in Fig. 5, which shows the notch reader 5 which detects the position of the engraved cylinder 1, by reading a reference on the inside surface of the same, and the reader 6 which detects the position of the sheet L. Figure 5 also shows the generation of an embossed surface 4a at the passage between the cylinders 1 and 2.

At the end of the registration operation, the thrust pressure is restored to the nominal value P.

Preferably, as illustrated in Fig. 4, the registration operation is performed at the passage of the joint portion 11 in the embossing zone between the cylinders 1 and 2. This allows preventing any risk that the registration operation interferes with the quality of the product.

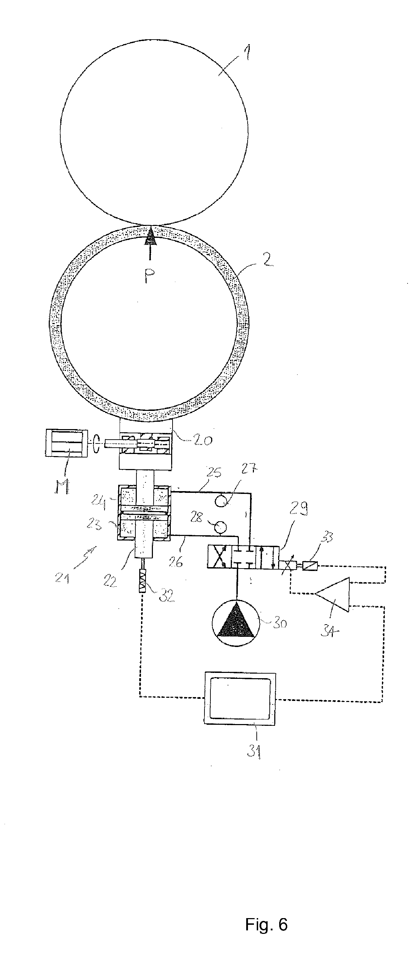

Fig. 6 shows a particularly preferred embodiment wherein the counter-cylinder 2 is pushed against the engraved cylinder 1 by a hydraulic cylinder 21, with interposition of an eccentric 20 actuated by an electric motor M. Said hydraulic cylinder 21 comprises a double action piston 22 with chambers 23 and 24 supplied with pressurized oil by a pump 30 with valve 29, through lines 25 and 26 with respective pressure transducers 27, 28.

The position of the piston 22 is detected by a linear transducer 32, and the pressure in the valve by a transducer 33. A PLC indicated as 31 controls the valve 29, through an amplifier 34. The valve 29 may switch between the positions of cylinder locked, cylinder open, and cylinder closed.

During the registered embossing, the hydraulic cylinder 21 is controlled at constant pressure, i.e. it keeps constant the thrust P which is transmitted to the counter-cylinder 2 and, thus, to the engraved cylinder 1. In order to allow the registration operation, a rotation of the eccentric 20 tends to push the piston 22 downwards in the figure, and causes an "opening" of the counter-cylinder 2, wherein this term, like previously mentioned, does not necessarily indicate a detachment from the engraved cylinder 1, but at least a reduction of the thrust P. In the meanwhile, the hydraulic cylinder 21 is controlled at "constant position", through rapid switching of the valve 29, which intervene on the pressure in the chamber 23 and respectively 24, holding the piston 22. In these conditions, the engraved cylinder 1 performs advance/delay registration movements ω_{R} and/or axial aligning registration movements S_{R} (Fig. 4) that can be controlled manually or, more preferably, can be calculated automatically based on the notch reading as illustrated, for example, in Fig. 5.

Upon completion of the operation, the eccentric 30 returns to the normal operating position while the hydraulic system returns to the working condition, closing the counter-cylinder 2 and restoring the thrust P.

An optional aspect of the invention also provides for controlling the temperature of the engraved cylinder 1. Actually, such control can be useful to ensure that the diameter D maintains the nominal value, so as to meet the above mentioned equivalence A =π · D. In other words, a temperature control serves to prevent or correct a systematic error that would be otherwise caused by the thermal expansion of the engraved cylinder 1.

A further aspect of the invention, as mentioned, is a continuous registration taking advantage of the plasticity of the material. In fact, it has been observed that, under suitable conditions, the plasticity of the laminate sheet, due to the material and the high temperature, is sufficient to allow a sliding of the engraved cylinder 1 with respect to the sheet L.

## Claims

1. Method for making a laminate product comprising the steps of:
- continuous coupling between a support substrate and a printed film with a predetermined decoration, obtaining a laminate sheet (L);
- synchronised embossing of said laminate sheet, the embossing being synchronised with the decoration of said printed film;
the method being **characterised in that**:
- said embossing is carried out continuously, by means of the passage of said laminate product between at least one engraved embossing cylinder (1), and a pressure counter-cylinder (2);
- the process comprises operations for registering the engraved cylinder (1), to keep the embossing synchronised, wherein each registration operation comprises suitable registration displacements (ω_{R}, S_{R}) of said engraved cylinder, said displacements being operated:
a) in conjunction with a reduction of the thrust pressure between said engraved cylinder and said counter-cylinder, from a nominal thrust pressure (P) to a reduced registration thrust pressure (P_{R}), or
b) due to a sliding between the surface (3) of said engraved cylinder (1) and the surface (4) of the laminate sheet, the latter being in a substantially plastic state due to the temperature.

2. Method according to claim 1, wherein the laminate sheet comprises a linear succession of portions (10) comprising the same decoration, defining a pitch of the laminate sheet, and registration operations are performed during the passage, between said engraved cylinder (1) and said counter-cylinder (2), of joining zones (11) between said portions (10) of the sheet.

3. Method according to claim 1 or 2, wherein the registration comprises a forward or rearward rotation of the engraved cylinder (1), to correct a delay or advance error with respect to the longitudinal direction of advancement of the laminate (L), and/or an axial displacement of said cylinder, to correct an alignment error between the cylinder (1) and the sheet (L), in the direction perpendicular to the abovementioned direction of advancement.

4. Method according to any one of the preceding claims, wherein the amount of the registration displacements is calculated automatically according to the detection of suitable references associated to the laminate sheet and to the engraved cylinder.

5. Method according to option a) of claim 1, said reduced thrust pressure (P_{R}) being 50% or less, with respect to the nominal pressure (P), said reduced pressure being preferably lower than 20 kg/cm and more preferably in the range 5-10 kg/cm.

6. Method according to option a) of claim 1, wherein the thrust pressure (P) is generated by a hydraulic system (21) comprising at least one hydraulic cylinder with a piston acting on the counter-cylinder (2) indirectly by means of an interface member (20), preferably an eccentric controlled by an electric motor; said hydraulic system being controlled to keep the thrust pressure of the counter-cylinder constant during the embossing operation, and wherein the registration provides at least steps of:
i) temporarily modifying the method for controlling said hydraulic system, operating in constant set-up position, instead of constant pressure, and
ii) reducing the pressure generated by said hydraulic system on the counter-cylinder, due to a displacement of said interface element.

7. Method according to claim 1, option b), the laminate being made of PVC reinforced with glass fibre, or equivalent material, and the temperature of the laminate being equivalent or greater than 150 °C and preferably between 150 and 200 °C.

8. Method according to any one of the preceding claims, said laminate sheet having a decoration reproducing the appearance of wood, or other.

9. Apparatus for providing a laminate product with registered embossing, adapted to operate according to the method of any one of the preceding claims.

10. Apparatus according to claim 9, comprising a double acting hydraulic cylinder (21) arranged to deliver a thrust of the counter-cylinder (2) against the engraved cylinder (1), with the interposition of an eccentric (20) between said hydraulic cylinder (21) and said counter-cylinder (2), and wherein:
- during the registered embossing, said hydraulic cylinder (21) is controlled at constant pressure keeping the thrust (P) transmitted to said counter-cylinder (2) constant;
- during the registration operation, a rotation of said eccentric (20) tends to push the piston (22) of the hydraulic cylinder downwards as in the drawing, and said hydraulic cylinder is controlled in constant position mode, keeping the relative piston (22) stationary.
